# EUROPÄISCHE PATENTANMELDUNG

(11) **EP 3 249 572 A1**
(43) Veröffentlichungstag der Anmeldung: **29.11.2017**
(21) Anmeldenummer: 16171326.8
(22) Anmeldetag: 25.05.2016
(51) Int. Cl.: G06K 7/10, G06K 7/00

(54) **FUNK-TRANSPONDERSYSTEM UND VERFAHREN ZUR ÜBERWACHUNG EINES GEGENSTANDS MITTELS EINES FUNK-TRANSPONDERSYSTEMS**

(71) Anmelder: Siemens Aktiengesellschaft, 80333 München (DE)
(72) Erfinder: Richter, Siegfried, 91207 Lauf (DE)

(57) **Zusammenfassung**

Zur Überwachung eines Gegenstands wird an einem zu überwachenden Gegenstand dauerhaft ein erster Funk-Transponder befestigt wird, der eine Antenne, eine Sende- und Empfangseinheit zum Datenaustausch über eine Funk-Transponder-Schnittstelle und eine Speichereinheit zur persistenten Datenspeicherung aufweist, die mittels eines Funk-Transponder-Lesegerätes auslesbar bzw. beschreibbar ist. Am zu überwachenden Gegenstand wird temporär ein zweiter Funk-Transponder befestigt, der zusätzlich ein Funk-Transponder-Lesegerät und ein Mobilfunk- oder Drahtlos-Kommunikationsmodul aufweist. Über die Funk-Transponder-Schnittstelle werden mittels des Funk-Transponder-Lesegeräts Daten aus der Speichereinheit des ersten Funk-Transponders ausgelesen werden, bzw. die Speichereinheit des ersten Funk-Transponders wird hierüber mit Daten beschrieben. Mittels des Mobilfunk- oder Drahtlos-Kommunikationsmoduls werden Prozesssteuerungs- bzw. -überwachungsdaten an das Funk-Transponder-Lesegerät bzw. vom Funk-Transponder-Lesegerät übermittelt.

## Beschreibung

Aus EP 2 616 987 B1 ist ein Verfahren zum Aufbau einer Kommunikationsverbindung zwischen einem RFID-Lesegerät und einem RFID-Transponder bekannt, bei dem das RFID-Lesegerät für eine wechselweise Nutzung jeweils eines Funkkanals einer Mehrzahl von Funkkanälen einrichtet ist. Für eine ununterbrochene Nutzung der Funkkanäle wird jeweils eine maximale Dauer definiert. Scheitert der Aufbau einer Kommunikationsverbindung zwischen dem RFID-Lesegerät und dem RFID-Transponder, erfolgen unmittelbar ein Wechsel des Funkkanals und ein Starten eines erneuten Aufbauversuchs. Bei einem erfolgreichen Aufbau der Kommunikationsverbindung wird der verwendete Funkkanal möglichst lange, jedoch höchstens bis zum Ablauf der maximalen Dauer beibehalten.

In EP 2 546 777 B1 ist ein Verfahren zur Adressierung zumindest eines drahtlos zugreifbaren Datenspeichers beschrieben, bei dem die Adressierung des Datenspeichers in einem funkbasierten Datenaustausch zwischen dem Datenspeicher und einem Schreib/Lesegerät mittels einer ersten Identifikationsnummer des Datenspeichers erfolgt. Dabei wird der ersten Identifikationsnummer des Datenspeichers durch das Schreib/Lesegerät eine zweite Identifikationsnummer zugeordnet. Zur Identifikation des Datenspeichers wird bei einem auf diesen Datenspeicher bezogenen Datenaustausch des Schreib/Lesegerätes mit einer industriellen Automatisierungskomponente jeweils die zweite Identifikationsnummer verwendet. Dadurch kann die Automatisierungskomponente verkürzte Identifikationsnummern verwenden. Dabei ist weiterhin eine eindeutige Adressierung zwischen der Automatisierungskomponente und dem drahtlos zugreifbaren Datenspeicher gegeben.

Für eine ortsflexible Fertigung sollten Werkzeuge und Material exakt zueinander positionierbar sowie durchgängig lokalisierbar sein. Üblicherweise sind entsprechende Ortungs- bzw. Lokalisierungssysteme relativ teuer und sollten nach einem Bearbeitungsschritt wieder für Bearbeitungsschritte an nachfolgend zu bearbeitenden Objekten verfügbar sein. Andererseits sollten fertigungs- bzw. qualitätsrelevante Produktinformationen über einen gesamten Lebenszyklus eines Produkts einfach und produktnah abrufbar sein.

Der vorliegenden Erfindung liegt daher die Aufgabe zugrunde, ein effizientes Verfahren zur durchgängigen Überwachung eines Gegenstands mittels eines Funk-Transpondersystems anzugeben sowie ein hierfür geeignetes Funk-Transpondersystem zu schaffen.

Diese Aufgabe wird erfindungsgemäß durch einen Funk- Transpondersystem mit den in Anspruch 1 angegebenen Merkmalen und durch ein Verfahren mit den in Anspruch 8 angegebenen Merkmalen gelöst. Vorteilhafte Weiterbildungen der vorliegenden Erfindung sind in den abhängigen Ansprüchen angegeben.

Das erfindungsgemäße Funk-Transpondersystem umfasst einen dauerhaft an einem zu überwachenden Gegenstand befestigbaren ersten Funk-Transponder, der eine Antenne, eine Sende- und Empfangseinheit zum Datenaustausch über eine Funk-Transponder-Schnittstelle und eine Speichereinheit zur persistenten Datenspeicherung aufweist. Diese Speichereinheit ist mittels eines Funk-Transponder-Lesegerätes auslesbar bzw. beschreibbar. Die Funk-Transponder-Schnittstelle kann beispielsweise eine RFID- oder NFC-Schnittstelle sein.

Darüber hinaus umfasst das erfindungsgemäße Funk-Transpondersystem einen zumindest temporär am zu überwachenden Gegenstand befestigbaren zweiten Funk-Transponder auf, der eine Antenne, eine Sende- und Empfangseinheit zum Datenaustausch über eine Funk-Transponder-Schnittstelle, eine Speichereinheit, ein Funk-Transponder-Lesegerät und ein Mobilfunk- oder Drahtlos-Kommunikationsmodul aufweist. Das Funk-Transponder-Lesegerät ist dafür ausgestaltet und eingerichtet, über die Funk-Transponder-Schnittstelle Daten aus der Speichereinheit des ersten Funk-Transponders auszulesen bzw. die Speichereinheit des ersten Funk-Transponders mit Daten zu beschreiben. Das Mobilfunk- oder Drahtlos-Kommunikationsmodul ist dafür ausgestaltet und eingerichtet, Prozesssteuerungs- bzw. -überwachungsdaten an das Funk-Transponder-Lesegerät bzw. vom Funk-Transponder-Lesegerät zu übermitteln. Die Prozesssteuerungs- bzw. -überwachungsdaten können beispielsweise einem Produktions-, Transport-, Wartungs- bzw. Telemetriesystem zugeordnet sein. Das Mobilfunk- oder Drahtlos-Kommunikationsmodul kann insbesondere ein WLAN-, WPAN-, WiMax-, Bluetooth-, 5G-, LTE-, UMTS- oder GSM-Kommunikationsmodul sein.

Das erfindungsgemäße Funk-Transpondersystem bietet den Vorteil, dass über einen gesamten Lebenszyklus eines zu überwachenden Gegenstands relevante Daten in einen kostengünstig realisierbaren ersten Funk-Transponder geschrieben werden, während für Spezialanwendungen im Rahmen von z.B. Produktion, Logistik und Endnutzerverwendung für andere zu überwachende Gegenstände wiederbenutzbare und üblicherweise aufwendigere zweite Funk-Transponder bedarfsgerecht verwendet werden.

Entsprechend dem erfindungsgemäßen Verfahren zur Überwachung eines Gegenstands mittels eines Funk-Transpondersystems gemäß vorangehenden Ausführungen wird an einem zu überwachenden Gegenstand dauerhaft ein erster Funk-Transponder befestigt. Der erste Funk-Transponder weist eine Antenne, eine Sende- und Empfangseinheit zum Datenaustausch über eine Funk-Transponder-Schnittstelle und eine Speichereinheit zur persistenten Datenspeicherung aufweist, die mittels eines Funk-Transponder-Lesegerätes auslesbar bzw. beschreibbar ist.

Außerdem wird am zu überwachenden Gegenstand erfindungsgemäß zumindest temporär ein zweiter Funk-Transponder befestigt, der eine Antenne, eine Sende- und Empfangseinheit zum Datenaustausch über eine Funk-Transponder-Schnittstelle, eine Speichereinheit, ein Funk-Transponder-Lesegerät und ein Mobilfunk- oder Drahtlos-Kommunikationsmodul aufweist. Über die Funk-Transponder-Schnittstelle werden mittels des Funk-Transponder-Lesegeräts Daten aus der Speichereinheit des ersten Funk-Transponders ausgelesen, bzw. die Speichereinheit des ersten Funk-Transponders wird hierüber mit Daten beschrieben. Mittels des Mobilfunk- oder Drahtlos-Kommunikationsmoduls werden Prozesssteuerungs- bzw. -überwachungsdaten an das Funk-Transponder-Lesegerät bzw. vom Funk-Transponder-Lesegerät übermittelt.

Entsprechend einer vorteilhaften Ausgestaltung der vorliegenden Erfindung werden mittels des Funk-Transponder-Lesegeräts ausgewählte Prozesssteuerungs- bzw. -überwachungsdaten aus der Speichereinheit des ersten Funk-Transponders ausgelesen, bzw. die Speichereinheit des ersten Funk-Transponders wird in entsprechender Weise mit ausgewählten Prozesssteuerungs- bzw. -überwachungsdaten beschrieben. Somit können über einen Lebenszyklus eines zu überwachenden Gegenstands relevante Daten selektiv in die Speichereinheit des ersten Funk-Transponders geschrieben werden und dort dauerhaft verbleiben.

Der zweite Funk-Transponder kann mit dem ersten Funk-Transponder beispielsweise während eines ersten Steuerungs- bzw. -Überwachungsprozessabschnitts fest gekoppelt werden. Nach einer Entkopplung vom ersten Funk-Transponder kann der zweite Funk-Transponder für einen zweiten Steuerungs- bzw. -Überwachungsprozessabschnitt vorteilhafterweise durch einen weiteren zweiten Funk-Transponder ersetzt werden. Damit kann für den ersten und den zweiten Steuerungs- bzw. -Überwachungsprozessabschnitt situativ und effizient jeweils immer der am meisten geeignete zweite Funk-Transponder verwendet werden. Vorzugsweise werden der zweite Funk-Transponder und der weitere zweite Funk-Transponder bei einer Kopplung mit dem ersten Funk-Transponder hinsichtlich ihrer jeweiligen Konfiguration durch den ersten Funk-Transponder initialisiert.

Entsprechend einer besonders bevorzugten Ausgestaltung der vorliegenden Erfindung umfasst der zweite Transponder ein Ortungsmodul zur Lokalisierung des zu überwachenden Gegenstands. Dabei übermittelt das Mobilfunk- oder Drahtlos-Kommunikationsmodul Lokalisierungsdaten des zu überwachenden Gegenstands an ein Prozesssteuerungs- bzw. -überwachungssystem. Auf diese Weise kann eine lückenlose Lokalisierung des zu überwachenden Gegenstands sichergestellt werden. Das Ortungsmodul kann beispielsweise einen GPS- oder GLONASS-Sensor, einen Ultra-Breitband-Positionssensor oder zusätzliche Beschleunigungssensoren umfassen.

Die vorliegende Erfindung wird an einem Ausführungsbeispiel anhand der Zeichnung näher Erläutert. Es zeigt
- Figur 1: eine schematische Darstellung eines Funk-Transpondersystems mit einem dauerhaft an einem zu überwachenden Gegenstand befestigten ersten Funk-Transponder und einem temporär am zu überwachenden Gegenstand befestigten zweiten Funk-Transponder,
- Figur 2: eine schematische Darstellung einer Verwendung des Funk-Transpondersystems gemäß Figur 1 während eines Lebenszyklus des überwachten Gegenstands.

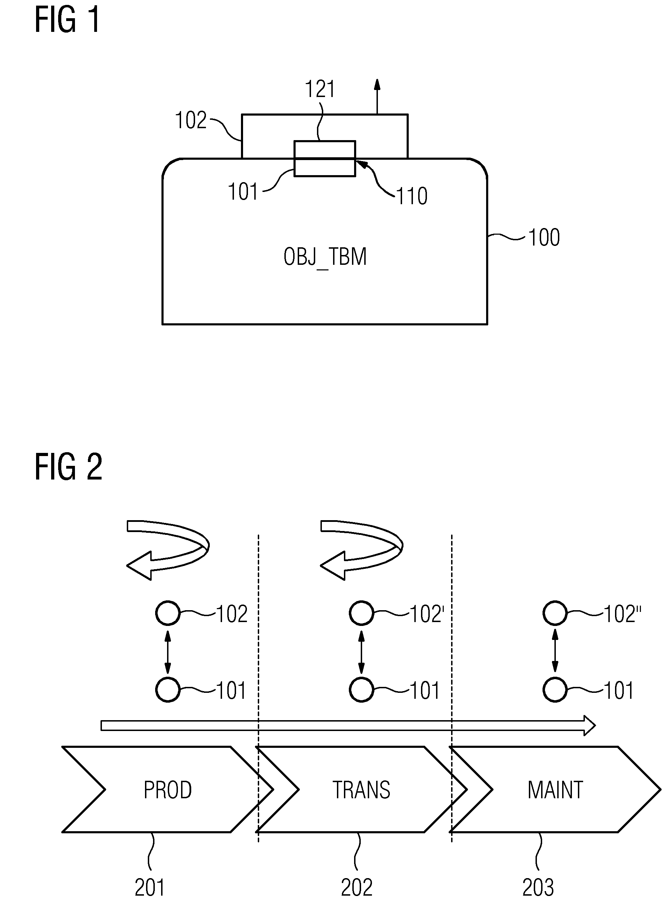

Das in Figur 1 dargestellte Funk-Transpondersystem umfasst einen dauerhaft an einem zu überwachenden Gegenstand 100 befestigten ersten Funk-Transponder 101 und einem temporär am zu überwachenden Gegenstand 100 befestigten zweiten Funk-Transponder 102. Der erste Funk-Transponder 101 weist eine Antenne, eine Sende- und Empfangseinheit zum Datenaustausch über eine Funk-Transponder-Schnittstelle 110 und eine Speichereinheit zur persistenten Datenspeicherung auf, die mittels eines Funk-Transponder-Lesegerätes 121 ausgelesen bzw. beschrieben werden kann. Die Funk-Transponder-Schnittstelle 110 ist vorzugsweise als RFID- oder NFC-Schnittstelle ausgestaltet.

Der zweite Funk-Transponder 102 weist ebenfalls eine Antenne, eine Sende- und Empfangseinheit zum Datenaustausch über eine Funk-Transponder-Schnittstelle und eine Speichereinheit auf. Zusätzlich umfasst der zweite Funk-Transponder 102 ein Funk-Transponder-Lesegerät 121 und ein Mobilfunk- bzw. Drahtlos-Kommunikationsmodul. Das Funk-Transponder-Lesegerät 121 ist dafür vorgesehen, über die Funk-Transponder-Schnittstelle 110 Daten aus der Speichereinheit des ersten Funk-Transponders 101 auszulesen bzw. die Speichereinheit des ersten Funk-Transponders 101 mit Daten zu beschreiben. Insbesondere können mittels des Funk-Transponder-Lesegeräts 121 ausgewählte Prozesssteuerungs- bzw. -überwachungsdaten aus der Speichereinheit des ersten Funk-Transponders ausgelesen werden, bzw. die Speichereinheit des ersten Funk-Transponders kann dementsprechend mit ausgewählten Prozesssteuerungs- bzw. -überwachungsdaten beschrieben werden.

Mittels des Mobilfunk- bzw. Drahtlos-Kommunikationsmoduls des zweiten Funk-Transponders 102 werden Prozesssteuerungs- bzw. -überwachungsdaten an das Funk-Transponder-Lesegerät 121 bzw. vom Funk-Transponder-Lesegerät 121 übermittelt. Die Prozesssteuerungs- bzw. -überwachungsdaten können szenarioabhängig beispielsweise einem Produktions-, Transport-, Wartungs- bzw. Telemetriesystem zugeordnet sein. Eine Übermittlung der Prozesssteuerungs- bzw. -überwachungsdaten an das Funk-Transponder-Lesegerät 121 kann beispielsweise durch eine manuelle Benutzeraktion, eine Prozessaktion oder durch ein Erreichen vorgegebener Positionen ausgelöst werden. Eine Benutzeraktion kann im einfachsten ein Drücken einer Taste sein, während eine Prozessaktion beispielsweise ein Festziehen einer Schraube an einem Bauteil sein kann. Unter einem Erreichen vorgegebener Positionen kann beispielsweise verstanden werden, dass der zu überwachende Gegenstand ein Prüffeld verlässt oder in einem Auslieferungslager bereitgestellt wird.

Das Mobilfunk- oder Drahtlos-Kommunikationsmodul des zweiten Funk-Transponders 102 kann beispielsweise ein WLAN-, WPAN-, WiMax-, Bluetooth-, 5G-, LTE-, UMTS- oder GSM-Kommunikationsmodul sein. Zusätzlich kann das Mobilfunk- oder Drahtlos-Kommunikationsmodul des zweiten Funk-Transponders 102 Sensoren für eine Erfassung von Beschleunigung, Temperatur oder Feuchtigkeit umfassen, insbesondere zur Dokumentation von Transportschäden oder einer unsachgemäßen Verwendung.

Im vorliegenden Ausführungsbeispiel umfasst der zweite Transponder 121 zusätzlich ein Ortungsmodul zur Lokalisierung des zu überwachenden Gegenstands. Auf diese Weise kann das Mobilfunk- oder Drahtlos-Kommunikationsmodul des zweiten Funk-Transponders 102 Lokalisierungsdaten des zu überwachenden Gegenstands an ein Prozesssteuerungs- bzw. -überwachungssystem übermitteln. Das Ortungsmodul ermöglicht darüber hinaus beispielsweise eine Unterstützung von Montagevorgängen in einer Fertigungslinie, wenn ein Roboter oder Werker lokalisierte Teile an einem lokalisierten Werkstück montiert.

Das Funk-Transpondersystem kann zusätzlich einen Massenspeicher umfassen, in dem geplante Prozessschritte und Prozessdaten, wie ein Materialbaum, gespeichert sind. Dieser Massenspeicher kann insbesondere bei einer fehlenden bzw. abgebrochenen Kommunikationsverbindung zu einem überlagerten ERP-, MES- oder Qualitätsüberwachungs-System genutzt werden. Hierzu erfolgt vorzugsweise eine Synchronisierung über eine Funkverbindung zwischen dem Massenspeicher und o.g. Systemen.

Entsprechend Figur 2 ist der zweite Funk-Transponder 102 mit dem ersten Funk-Transponder 101 während eines Produktionsprozesses 201, der einen ersten Steuerungs- bzw. -Überwachungsprozessabschnitt darstellt, fest gekoppelt. Der während des Produktionsprozesses 201 verwendete zweite Funk-Transponder 102 umfasst im vorliegenden Ausführungsbeispiel ein RTLS-Tag (Real-time Location System) als Ortungsmodul und ein iWLAN-Kommunikationsmodul (Industrial WLAN). Nach Beendigung des Produktionsprozesses 201 wird der zweite Funk-Transponder 102 vom ersten Funk-Transponder 101 entkoppelt und vom zu überwachenden Gegenstand 100 entfernt.

Für einen sich an den Produktionsprozess 201 anschließenden Transportprozess 202, der einen zweiten Steuerungs- bzw. -Überwachungsprozessabschnitt darstellt, wird der zweite Funk-Transponder 102 durch einen weiteren zweiten Funk-Transponder 102' ersetzt, der für den Transportprozess 202 am zu überwachenden Gegenstand 100 befestigt wird. Der während des Transportprozesses 202 verwendete zweite Funk-Transponder 102' umfasst im vorliegenden Ausführungsbeispiel ein GPS-Tag als Ortungsmodul und ein Mobilfunk-Kommunikationsmodul.

An den Transportprozess 202 schließt sich endnutzerseitig ein Wartungsprozess 203 an, bei dem für den zu überwachenden Gegenstand 100 kontinuierlich und vorausschauend ein individueller Wartungsbedarf ermittelt wird und ggf. entsprechende Wartungsmaßnahmen geplant werden. Für den Wartungsprozess 203, der einen dritten Steuerungs- bzw. -Überwachungsprozessabschnitt darstellt, wird der weitere zweite Funk-Transponder 102' durch noch einen weiteren zweiten Funk-Transponder 102" ersetzt, der für den Wartungsprozess 203 am zu überwachenden Gegenstand 100 befestigt wird. Der während des Wartungsprozesses 203 verwendete zweite Funk-Transponder 102" umfasst im vorliegenden Ausführungsbeispiel eine Kombination aus WLAN-Tag und GPS-Tag als Ortungsmodul und ein WLAN-Kommunikationsmodul. Die jeweiligen zweiten Funk-Transponder 102, 102`, 102" werden für ihre prozessabschnittsweise Verwendung im Rahmen einer Kopplung mit dem ersten Funk-Transponder 101 hinsichtlich ihrer jeweiligen Konfiguration durch den ersten Funk-Transponder 101 initialisiert.

Zur Verfolgung eines Produktes über seinen gesamten Lebenszyklus wird entsprechend dem vorliegenden Ausführungsbeispiel am Produkt dauerhaft ein RFID- oder NFC-Tag angebracht, in das von anderen lediglich temporär angebrachten Tags, z.B. während Produktion, Transport, Endnutzerverwendung, erfasste und dauerhaft relevante Daten eingeschrieben werden. Auf diese Weise können beispielsweise während eines Wartungsprozesses zur Planung von Wartungsmaßnahmen produktindividuelle Daten ausgewertet werden, die während eines Produktionsprozesses in das dauerhaft am Produkt angebrachte RFID- oder NFC-Tag geschrieben worden sind. Anstelle von RFID- oder NFC-Tags können grundsätzlich auch optisch lesbare Tags, die beispielsweise QR-Codes o.ä. umfassen, an zu verfolgenden Produkten angebracht werden. In diesem Fall werden dauerhaft relevante produktindividuelle Daten vorzugsweise Cloud-basiert gespeichert anstelle innerhalb eines am Produkt befestigten RFID- oder NFC-Tags.

## Patentansprüche

1. Funk-Transpondersystem mit
- einem dauerhaft an einem zu überwachenden Gegenstand befestigbaren ersten Funk-Transponder, der
- eine Antenne,
- eine Sende- und Empfangseinheit zum Datenaustausch über eine Funk-Transponder-Schnittstelle und
- eine Speichereinheit zur persistenten Datenspeicherung aufweist, die mittels eines Funk-Transponder-Lesegerätes auslesbar und/oder beschreibbar ist,
- einem zumindest temporär am zu überwachenden Gegenstand befestigbaren zweiten Funk-Transponder, der
- eine Antenne,
- eine Sende- und Empfangseinheit zum Datenaustausch über eine Funk-Transponder-Schnittstelle,
- eine Speichereinheit,
- ein Funk-Transponder-Lesegerät, das dafür ausgestaltet und eingerichtet ist, über die Funk-Transponder-Schnittstelle Daten aus der Speichereinheit des ersten Funk-Transponders auszulesen und/oder die Speichereinheit des ersten Funk-Transponders mit Daten zu beschreiben, und
- ein Mobilfunk- oder Drahtlos-Kommunikationsmodul aufweist, das dafür ausgestaltet und eingerichtet ist, Prozesssteuerungs- und/oder -überwachungsdaten an das Funk-Transponder-Lesegerät und/oder vom Funk-Transponder-Lesegerät zu übermitteln.

2. Funk-Transpondersystem nach Anspruch 1,
bei dem das Funk-Transponder-Lesegerät dafür ausgestaltet und eingerichtet ist, ausgewählte Prozesssteuerungs- und/oder -überwachungsdaten aus der Speichereinheit des ersten Funk-Transponders auszulesen und/oder die Speichereinheit des ersten Funk-Transponders mit ausgewählten Prozesssteuerungs- und/oder -überwachungsdaten zu beschreiben.

3. Funk-Transpondersystem nach einem der Ansprüche 1 oder 2,
bei dem die Prozesssteuerungs- und/oder -überwachungsdaten einem Produktions-, Transport-, Wartungs- und/oder Telemetriesystem zugeordnet sind.

4. Funk-Transpondersystem nach einem der Ansprüche 1 bis 3,
bei dem der zweite Funk-Transponder mit dem ersten Funk-Transponder während eines ersten Steuerungs- und/oder -Überwachungsprozessabschnitts fest gekoppelt ist und bei dem der zweite Funk-Transponder nach einer Entkopplung vom ersten Funk-Transponder für einen zweiten Steuerungs- und/oder -Überwachungsprozessabschnitt durch einen weiteren zweiten Funk-Transponder ersetzbar ist.

5. Funk-Transpondersystem nach Anspruch 4,
bei dem der zweite Funk-Transponder und der weitere zweite Funk-Transponder dafür ausgestaltet und eingerichtet sind, bei einer Kopplung mit dem ersten Transponder hinsichtlich ihrer jeweiligen Konfiguration durch den ersten Funk-Transponder initialisiert zu werden.

6. Funk-Transpondersystem nach einem der Ansprüche 1 bis 5,
bei dem die Funk-Transponder-Schnittstelle eine RFID- oder NFC-Schnittstelle ist und bei dem das Mobilfunk- oder Drahtlos-Kommunikationsmodul ein WLAN-, WPAN-, WiMax-, Bluetooth-, 5G-, LTE-, UMTS- oder GSM-Kommunikationsmodul ist.

7. Funk-Transpondersystem nach einem der Ansprüche 1 bis 6,
bei dem der zweite Funk-Transponder ein Ortungsmodul zur Lokalisierung des zu überwachenden Gegenstands umfasst und bei dem das Mobilfunk- oder Drahtlos-Kommunikationsmodul zur Übermittlung von Lokalisierungsdaten des zu überwachenden Gegenstands an ein Prozesssteuerungs- und/oder -überwachungssystem ausgestaltet und eingerichtet ist.

8. Verfahren zur Überwachung eines Gegenstands mittels eines Funk-Transpondersystems nach einem der Ansprüche 1 bis 7, bei dem
- an einem zu überwachenden Gegenstand dauerhaft ein erster Funk-Transponder befestigt wird, der
- eine Antenne,
- eine Sende- und Empfangseinheit zum Datenaustausch über eine Funk-Transponder-Schnittstelle und
- eine Speichereinheit zur persistenten Datenspeicherung aufweist, die mittels eines Funk-Transponder-Lesegerätes auslesbar und/oder beschreibbar ist,
- am zu überwachenden Gegenstand zumindest temporär ein zweiter Funk-Transponder befestigt wird, der
- eine Antenne,
- eine Sende- und Empfangseinheit zum Datenaustausch über eine Funk-Transponder-Schnittstelle,
- eine Speichereinheit,
- ein Funk-Transponder-Lesegerät und
- ein Mobilfunk- oder Drahtlos-Kommunikationsmodul aufweist,
- über die Funk-Transponder-Schnittstelle mittels des Funk-Transponder-Lesegeräts Daten aus der Speichereinheit des ersten Funk-Transponders ausgelesen werden und/oder die Speichereinheit des ersten Funk-Transponders mit Daten beschrieben wird,
- mittels des Mobilfunk- oder Drahtlos-Kommunikationsmoduls Prozesssteuerungs- und/oder -überwachungsdaten an das Funk-Transponder-Lesegerät und/oder vom Funk-Transponder-Lesegerät übermittelt werden.

9. Verfahren nach Anspruch 8,
bei dem mittels des Funk-Transponder-Lesegeräts ausgewählte Prozesssteuerungs- und/oder -überwachungsdaten aus der Speichereinheit des ersten Funk-Transponders ausgelesen werden und/oder die Speichereinheit des ersten Funk-Transponders mit ausgewählten Prozesssteuerungs- und/oder -überwachungsdaten beschrieben wird.

10. Verfahren nach einem der Ansprüche 8 oder 9,
bei dem der zweite Funk-Transponder mit dem ersten Funk-Transponder während eines ersten Steuerungs- und/oder -Überwachungsprozessabschnitts fest gekoppelt wird und bei dem der zweite Funk-Transponder nach einer Entkopplung vom ersten Funk-Transponder für einen zweiten Steuerungs- und/oder -Überwachungsprozessabschnitt durch einen weiteren zweiten Funk-Transponder ersetzt wird.

11. Verfahren nach Anspruch 10,
bei dem der zweite Funk-Transponder und der weitere zweite Funk-Transponder bei einer Kopplung mit dem ersten Funk-Transponder hinsichtlich ihrer jeweiligen Konfiguration durch den ersten Funk-Transponder initialisiert werden.

12. Verfahren nach einem der Ansprüche 8 bis 11,
bei dem der zweite Transponder ein Ortungsmodul zur Lokalisierung des zu überwachenden Gegenstands umfasst und bei dem das Mobilfunk- oder Drahtlos-Kommunikationsmodul Lokalisierungsdaten des zu überwachenden Gegenstands an ein Prozesssteuerungs- und/oder -überwachungssystem übermittelt.
